# EUROPÄISCHE PATENTSCHRIFT

(11) **EP 2 904 675 B1**
(45) Veröffentlichungstag und Bekanntmachung des Hinweises auf die Patenterteilung: **23.08.2017**
(21) Anmeldenummer: 13771396.2
(22) Anmeldetag: 30.09.2013
(51) Int. Cl.: H02G 3/32

(54) **VORRICHTUNG ZUM FÜHREN VON KABELN BEI WINDKRAFTANLAGEN**
APPARATUS FOR ROOTING CABLES IN WIND TURBINES
DISPOSITIF DE GUIDAGE DE CÂBLES DANS DES ÉOLIENNES

(30) Priorität: 04.10.2012 DE 102012019493; 04.10.2012 DE 102012019490
(43) Veröffentlichungstag der Anmeldung: 12.08.2015
(73) Patentinhaber: HYDAC Accessories GmbH, 66280 Sulzbach/Saar (DE)
(72) Erfinder: CASPARI, Jochen, 66606 St. Wendel (DE); EVEN, Rainer, 66123 Saarbrücken (DE); HISS, Helmut, 75228 Ispringen (DE); MARYNIOK, Peter, 66693 Mettlach (DE); SCHMITT, Martin, 66917 Knopp-Labach (DE)
(74) Vertreter: Bartels, Martin Erich Arthur
(86) Internationale Anmeldenummer: PCT/EP2013/002931
(87) Internationale Veröffentlichungsnummer: WO 2014/053230

(56) Entgegenhaltungen:
- EP-A1- 1 605 568
- WO-A1-2010/108538
- DE-A1-102010 032 687
- JP-A- 2008 298 051
- US-B1- 7 534 965

## Beschreibung

Die Erfindung betrifft eine Vorrichtung zum Führen von Kabeln bei Windkraftanlagen mit den Merkmalen im Oberbegriff von Anspruch 1.

Um die in Windkraftanlagen erzeugten Energien abzuführen sowie für andere betriebliche Zwecke, wie Steuerung, Überwachung und dergleichen, müssen Kabel, die vom Maschinenhaus durch den Turm nach unten verlaufen, so geführt werden, dass bei betrieblichen Bewegungen der Kabel, die als Kabelbündel vom Maschinenhaus in den Turm herabhängen, keine Beschädigungen oder Beeinträchtigungen der Kabel stattfinden. Da bei den üblichen Windkraftanlagen das Maschinenhaus mit der Generatoreinheit, von der das Kabelbündel ausgehend in den Turm herabhängt, im Betrieb bis zu drei Umdrehungen ausführen kann, bevor das Maschinenhaus zurückgesteuert wird, muss das Kabelbündel so geführt werden, dass die Kabel in dem in den Turm hängenden Kabelbündel die Bewegung zwar mitmachen können, dabei jedoch nicht derart aneinander scheuern, dass Beschädigungen der Isolation zu befürchten wären.

Hierfür ist es Stand der Technik, vgl. beispielsweise WO 2011/151465 A2, die Kabel, voneinander jeweils distanziert, vom drehbaren Maschinenhaus ausgehend in einem Kabelbündel zu einem im Turm undrehbar gelagerten Grundkörper und durch an diesem befindliche Durchführungen hindurch zu führen, wobei die Durchführungen in Abständen voneinander angeordnet sind, so dass die Kabel im Bündel wiederum voneinander distanziert sind. Bei der Verwindung des Bündels bei den Drehbewegungen des Maschinenhauses wird die Gefahr des Scheuerns der Kabel weitgehend vermieden. Jedoch führt die abrupte Richtungsänderung der Kabel, wie sie sich beim Verdrehen des Bündels im Bereich des Kabelaustritts aus den Durchführungen der Grundkörper ergibt, zu örtlichen Überbelastungen der Kabel und deren Isolation.

Die WO 2010/108538 A1 beschreibt eine Vorrichtung zum Führen von Kabeln bei Windkraftanlagen, bei der an zumindest einem in seinem Umriss vorzugsweise runden Grundkörper mehrere Durchführungen für mindestens ein Kabel verteilt angeordnet sind, wobei die Durchführungen mit einer Führungsanordnung versehen sind, die dem jeweiligen Kabel Bewegungen relativ zu dem die Führungsanordnung umgebenden Teil der Durchführung erlaubt, wobei mit dem Rand des vertikal bewegbaren Grundkörpers an diametral einander gegenüberliegenden Stellen radial vorstehende Laufrollen verbunden oder verbindbar sind, die in vertikalen Laufschienen im Turm geführt sind.

Die JP 2008-298051 und die DE 10 2010 032 687 A1 zeigen weitere Vorrichtung zum Führen von Kabeln bei Windkraftanlagen auf, wobei letzte zudem offenbart, dass ein die Durchführungen in Aufnahmen sicherndes, den Umfang des Grundkörpers umgebendes und an radial außen liegenden Teilkörpern der Durchführungen anliegendes Spannband vorgesehen ist.

Im Hinblick auf diese Problematik stellt sich die Erfindung die Aufgabe, eine Führungsvorrichtung zur Verfügung zu stellen, die bestmögliche Schonung der Kabel bei Drehbewegungen des Kabelbündels gewährleistet.

Erfindungsgemäß ist diese Aufgabe durch eine Vorrichtung gelöst, die die Merkmale des Patentanspruchs 1 in seiner Gesamtheit aufweist.

Demgemäß besteht eine wesentliche Besonderheit der Erfindung darin, dass ein die Durchführungen in Aufnahmen sicherndes, den Umfang des Grundkörpers umgebendes und an radial außen liegenden Teilkörpern der Durchführungen anliegendes Spannband vorgesehen ist und dass die radial vorstehenden Laufrollen an diametral einander gegenüberliegenden Seiten an dem den Umfang des Grundkörpers umgebenden Spannband angebracht sind. Dadurch ist der Grundkörper relativ zum Turm undrehbar gelagert, kann jedoch entsprechend der jeweiligen Länge des Kabelbündels die passenden Vertikalpositionen einnehmen.

Es ist ferner vorgesehen, dass die Durchführungen mit einer Führungsanordnung versehen sind, die dem jeweiligen Kabel Bewegungen relativ zu dem die Führungsanordnung umgebenden Teil der Durchführung erlaubt. Dadurch ist vermieden, dass die Kabel am Austritt aus der Durchführung zu abrupten Richtungsänderungen in der Art eines Abknickens gezwungen werden können, weil durch die innerhalb der Durchführungen gebotene Bewegungsfreiheit ein allmählicher Richtungsübergang erfolgen kann.

Bei besonders vorteilhaften Ausführungsbeispielen weist die jeweilige Führungsanordnung einen das durchgeführte Kabel umgebenden Einsatz auf, der in der zugehörigen Durchführung relativ zum Grundkörper beweglich gelagert ist.

Bei besonders bevorzugten Ausführungsbeispielen ist der Einsatz in Form eines das durchgeführte Kabel umgebenden Ringkörpers ausgebildet, dessen Außenseite ein Teil einer konvexen Kugelfläche bildet und an der ein Teil einer Kugelkalotte bildenden Wand der Innenseite der Durchführung gelagert ist. Dadurch ist für das Kabel eine kugelgelenkartige Führung gebildet, so dass für das Kabel Neigungsmöglichkeiten um beliebige Achsen zur Verfügung stehen.

Alternativ kann die Anordnung so getroffen sein, dass die Führungsanordnung einen elastomeren, das in der Durchführung aufgenommene Kabel nachgiebig umgebenden Ringkörper, vorzugsweise aus einem synthetischen Gummiwerkstoff, aufweist. Eine derartige Führung des Kabels mittels einer Art Manschette ist mit geringem Aufwand realisierbar und stellt daher eine sehr kostengünstige Lösung dar.

Gemäß einem weiteren vorteilhaften Ausführungsbeispiel weist die Führungsanordnung eine Drehlagerung für das durchgeführte Kabel auf.

Hierfür kann die Anordnung mit besonderem Vorteil so getroffen sein, dass die Drehlagerung ein Nadellager aufweist, dessen Innenring das durchgeführte Kabel umgibt und dessen Außenring am Grundkörper festgelegt ist. In besonders schonender Weise können sich dadurch die durchgeführten Kabel in die den Drehbewegungen des Bündels entsprechende Drehposition einstellen.

Bei einem alternativen Ausführungsbeispiel kann die Führungsanordnung drehbare Walzenkörper aufweisen, die derart angeordnet sind, dass sie seitliche Begrenzungen des Kabeldurchgangs der jeweiligen Durchführung bilden. Für das durchgeführte Kabel stehen dadurch an der Durchführung bewegliche Wände zur Verfügung.

Als besonders einfache und kostengünstige Lösung kann die Anordnung so getroffen sein, dass die Durchführungen durch runde Öffnungen in einer den Grundkörper bildenden, runden Scheibe gebildet sind, wobei die Führungsanordnung durch die Öffnungen von beidseits nach außen hin sich erweiternden Wölbungen der Wand der Öffnung gebildet ist. Somit kann sich das aus der Durchführung jeweils austretende Kabel in beliebige Neigungen relativ zur Ebene des Grundkörpers einstellen.

Bei einem weiter abgewandelten Ausführungsbeispiel weist der Grundkörper entlang seines kreisrunden Umrisses nebeneinanderliegende, radial nach außen offene Aufnahmen für in diese einsetzbare und darin festlegbare Durchführungen auf, wobei deren Durchgänge zum Ermöglichen des Einlegens betreffender Kabel öffenbar sind. Solche Ausführungsbeispiele zeichnen sich durch eine besondere Montagefreundlichkeit aus, weil kein Durchfädeln von Strangelementen durch geschlossene Durchgänge erforderlich ist. Dadurch ist auch ein leichtes Nachrüsten bei bestehenden Anlagen möglich.

Bei besonders vorteilhaften Ausführungsbeispielen sind die Durchführungen zum Ermöglichen des Öffnens der Durchgänge aus zwei die Öffnung des Durchgangs begrenzenden Teilkörpern gebildet, die in der jeweiligen Aufnahme in der die Öffnung schließenden Position verrastbar sind.

Diese Teilkörper können als Gleichteile ausgebildet sein, die jeweils die Hälfte einer Strangdurchführung bilden.

Um dem Umstand Rechnung zu tragen, dass sich beim Verdrehen des Kabelbündels dessen Länge verringert, ist bei besonders vorteilhaften Ausführungsbeispielen zumindest ein Grundkörper mit dem auf dem Turm der zugehörigen Windkraftanlage drehbaren Maschinenhaus verbunden und zumindest ein weiter unten angeordneter Grundkörper im Turm undrehbar und vertikal bewegbar gelagert.

Nachstehend ist die Erfindung anhand von in der Zeichnung dargestellten Ausführungsbeispielen im Einzelnen erläutert. Es zeigen:
- Fig. 1: eine stark schematisch vereinfachte Darstellung eines Kabelbündels, das aus dem Maschinenhaus einer Windkraftanlage in den Turm herabhängt und durch eine Vorrichtung geführt ist;
- Fig. 2: eine der Fig. 1 entsprechende Darstellung, wobei das Kabelbündel in einem verdrehten Zustand dargestellt ist;
- Fig. 3: eine perspektivische Schrägansicht eines Grundkörpers gemäß einem Ausführungsbeispiel der Vorrichtung, wobei der Grundkörper im Turm undrehbar und vertikal verschiebbar gelagert ist;
- Fig. 4: einen gegenüber Fig. 3 vergrößert gezeichneten Teilquerschnitt des Grundkörpers entsprechend der Schnittlinie IV-IV von Fig. 3;
- Fig. 5: eine perspektivische Schrägansicht des Grundkörpers gemäß einem weiteren Ausführungsbeispiel der Vorrichtung;
- Fig. 6: einen Querschnitt des Grundkörpers von Fig. 5, gezeichnet in perspektivischer Schrägansicht;
- Fig. 7: eine perspektivische Schrägansicht des Grundkörpers gemäß einem weiteren Ausführungsbeispiel der Vorrichtung;
- Fig. 8: eine in perspektivischer Schrägansicht, vergrößert und quer geschnitten gezeichnete Teildarstellung des Grundkörpers eines weiter abgewandelten Ausführungsbeispiels der Vorrichtung;
- Fig. 9: eine perspektivische Schrägansicht des Grundkörpers gemäß einer weiteren Abwandlung;
- Fig. 10: eine perspektivische Schrägansicht eines Grundkörpers eines noch weiter abgewandelten Ausführungsbeispiels;
- Fig. 11: eine der Fig. 3 ähnliche perspektivische Schrägansicht eines weiteren Ausführungsbeispiels;
- Fig. 12: eine Draufsicht des Ausführungsbeispiels von Fig. 11;
- Fig. 13: eine Schnittdarstellung entsprechend der Schnittlinie XIII-XIII von Fig. 12;
- Fig. 14: eine auseinandergezogene, perspektivische Schrägansicht lediglich eines Ringkörpers in abgewandelter, zweiteiliger Bauweise;
- Fig. 15: eine in perspektivischer Schrägansicht gezeigte Teildarstellung, in der lediglich der Grundkörper und eine einzige Laufschiene eines weiter abgewandelten Ausführungsbeispiels gezeigt sind;
- Fig. 16: ein gegenüber Fig. 15 vergrößert und in perspektivischer Schrägansicht gezeichneter Teilquerschnitt des Ausführungsbeispiels von Fig. 15;
- Fig. 17 und 18: perspektivische Schrägansichten der beim Beispiel von Fig. 15 und 16 vorgesehenen Gleitstücke, gesehen auf die Rückseite bzw. die Frontseite des gezeigten Gleitstücks;
- Fig. 19: eine den Fig. 5 und 10 ähnliche perspektivische Schrägansicht eines Ausführungsbeispiels der Erfindung;
- Fig. 20: eine Draufsicht des gesondert und ohne eingesetzte Durchführungen dargestellten Grundkörpers des Ausführungsbeispiels von Fig. 19;
- Fig. 21: eine gegenüber Fig. 19 vergrößert gezeichnete perspektivische Schrägansicht einer einzelnen Durchführung;
- Fig. 22: die in Fig. 21 gezeigte Durchführung, wobei deren beide Teilkörper voneinander abgehoben sind; und
- Fig. 23: eine im Maßstab von Fig. 21 und 22 gezeichnete perspektivische Teilansicht mit einer in eine Aufnahme des Grundkörpers eingesetzten Durchführung, die in einer Radialebene geschnitten dargestellt ist.

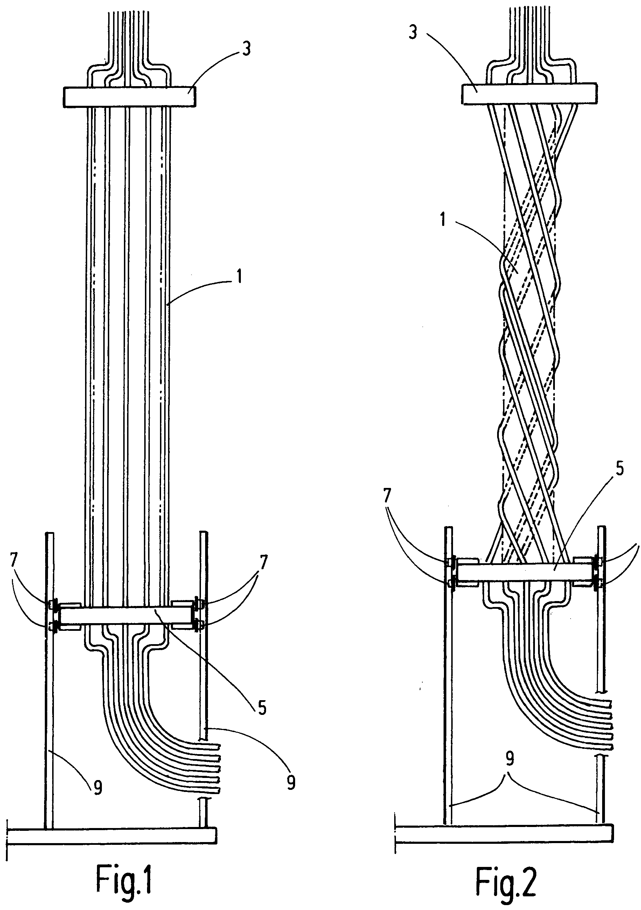

Die Ausführungsformen der Fig. 1 bis 18 dienen lediglich der Erläuterung des Hintergrundes der Erfindung und sind nicht Gegenstand eines Anspruches.

In den Fig. 1 und 2, die ein Ausführungsbeispiel einer Führungsanordnung zeigen, sind lediglich ein aus dem Maschinenhaus in den Turm herabhängendes Kabelbündel 1 und die mit dem Kabelbündel 1 zusammenwirkenden Teile einer Führungsvorrichtung gezeigt. Die weiteren Komponenten der zugehörigen Windkraftanlage, wie Maschinenhaus, Rotor, Turm und dergleichen, sind, da sie von konventioneller Bauweise sein können, in den vorliegenden Zeichnungen nicht dargestellt. Das Kabelbündel 1 ist zwischen einem oberen Grundkörper 3, der mit dem nicht gezeigten, drehbaren Maschinenhaus verbunden und vertikal unbeweglich ist, und einem unteren Grundkörper 5 geführt, welch letzterer am (nicht gezeigten) Turm undrehbar, jedoch vertikal bewegbar gelagert ist.

Zu diesem Zweck ist an einander diametral gegenüberliegenden Stellen des unteren Grundkörpers 5 jeweils ein Paar Laufrollen 7 angeordnet, die in Vertikalrichtung zueinander versetzt und in Laufschienen 9 geführt sind, die am Turm festgelegt sind und sich in Vertikalrichtung erstrecken. Während in Fig. 1 das Kabelbündel 1 in unverdrehtem, gestrecktem Zustand gezeigt ist, zeigt Fig. 2 den Zustand, bei dem sich das Maschinenhaus, und damit der obere Grundkörper 3, verdreht haben, so dass das Kabelbündel 1 verdreht oder gewunden ist. Aufgrund der durch die Verdrehung bedingten Verkürzung der Kabellängen hat sich in Fig. 2 der untere Grundkörper 5 zum Längenausgleich entlang der Laufschienen 9 vertikal nach oben verschoben. Die Bauweise des oberen Grundkörpers 3 kann der Bauweise des unteren Grundkörpers 5 entsprechen, abgesehen davon, dass am unteren Grundkörper 5 die Laufrollen 7 mit zugehöriger Halterung angebracht sind.

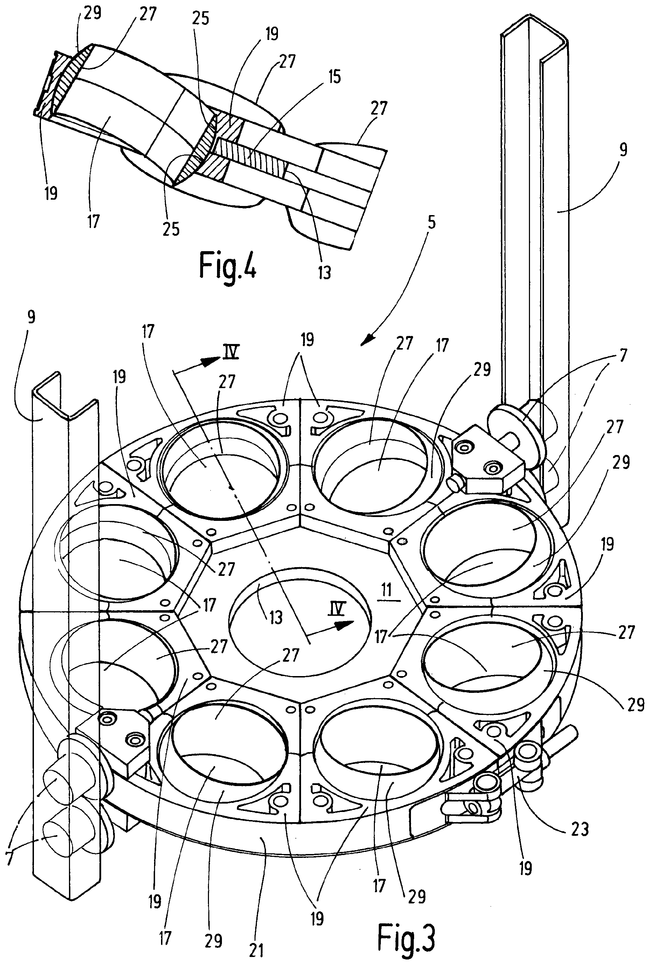

Die Fig. 3 und 4 zeigen nähere Einzelheiten der Bauweise des Grundkörpers 5 gemäß einem ersten Ausführungsbeispiel der Vorrichtung. Der Grundkörper 5 weist einen Zwischenkörper in Form einer Scheibe 11 auf, die, ausgehend von einem Mittelteil, in dem sich eine Zentralöffnung 13 befindet, radial nach außen verlaufende Speichen 15 (siehe Fig. 4) aufweist, die zwischen sich Platz für Durchführungen 17 freilassen, von denen beim vorliegenden Beispiel acht Durchführungen 17 auf einer Kreislinie verteilt angeordnet sind. Die Durchführungen 17 sind zwischen den Speichen 15 jeweils durch von beiden Seiten her auf der Scheibe 11 befestigte Sektorkörper 19 gebildet, die lückenlos aneinanderstoßen und mit ihrem kreisbogenförmigen Umfangsrand dem Grundkörper 5 einen kreisrunden Umriss verleihen. Damit die Sektorkörper 19 eine Ringstruktur bilden, bei der die aneinanderliegenden Sektorkörper 19 miteinander verspannt sind, ist um den Außenumfang der Struktur ein Spannband 21 herumgeführt, das mittels eines Spannschlosses 23 spannbar ist.

Wie am deutlichsten aus Fig. 4 entnehmbar ist, weisen die Sektorkörper 19 an ihrer den Durchgang der gebildeten Durchführung 17 begrenzenden Wand 25 eine konvexe Wölbung auf, die einen Teil einer Kugelkalotte bildet. Ein Einsatz, der das durch die jeweilige Durchführung 17 hindurchgeführte Kabel umgibt, weist die Form eines Ringkörpers 27 auf, dessen Außenseite ein Teil einer konvexen Kugelfläche 29 (siehe Fig. 4) bildet, mit der der Ringkörper 27 an der konkav gewölbten Wand 25 der Sektorkörper 19 anliegt. Dadurch ist der den Einsatz bildende Ringkörper 27 kugelgelenkartig am jeweiligen Grundkörper 3, 5 gelagert, so dass sich das durch die Durchführungen 17 hindurchgeführte Kabel auf beliebige Neigungen relativ zur Ebene des Grundkörpers 3, 5 einstellen sowie zusammen mit dem Einsatz (Ringkörper 27) verdrehen kann.

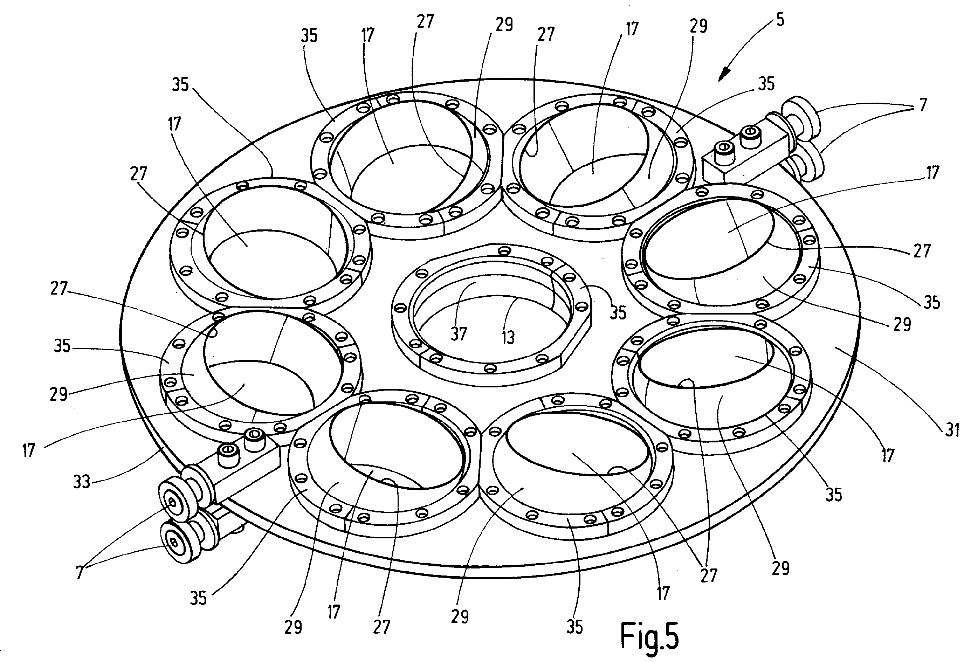

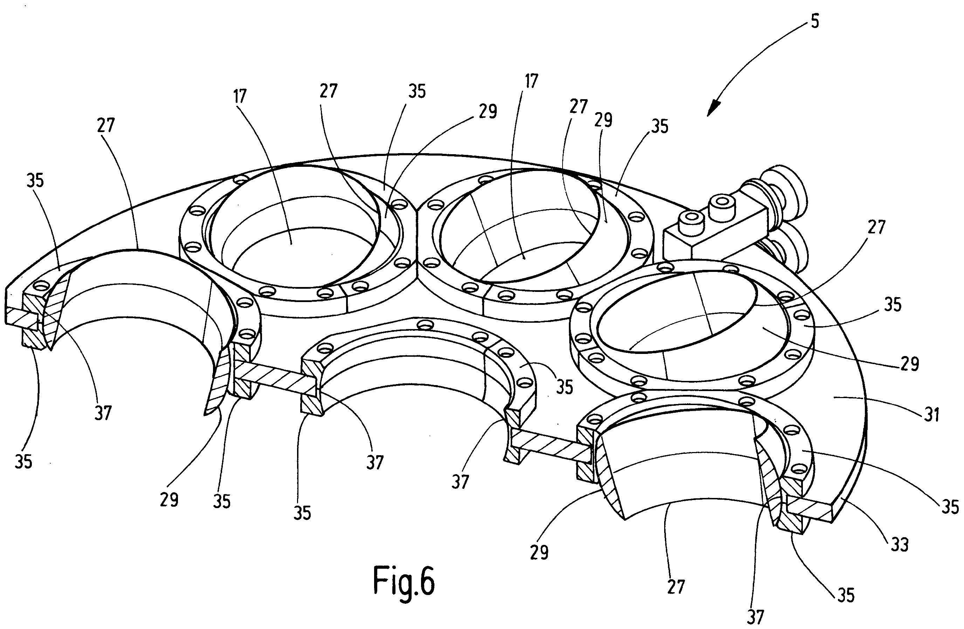

Fig. 5 und 6 zeigen ein weiteres Ausführungsbeispiel, das sich vom zuvor beschriebenen Beispiel hauptsächlich dadurch unterscheidet, dass eine Scheibe 31 vorgesehen ist, die nicht sternförmig gestaltet ist, wie dies bei der Scheibe 11 des zuvor beschriebenen Beispiels der Fall ist, sondern mit ihrem äußeren Rand 33 selbst den kreisrunden Umfang des Grundkörpers 3, 5 bildet. Außer der zentralen Öffnung 13 sind zur Bildung der Durchführungen 17 weitere Öffnungen der Scheibe 31 vorgesehen. Wie beim zuvor beschriebenen Beispiel ist die Führungsanordnung der Durchführungen 17 jeweils durch einen Einsatz in Form eines Ringkörpers 27 gebildet, dessen Außenseite wiederum Teil einer Kugelfläche 29 ist.

Anstelle der beim zuvor beschriebenen Beispiel vorgesehenen Sektorkörper 19 sind beim Beispiel von Fig. 5 und 6 Ringelemente 35 an Unterseite und Oberseite der Scheibe 31 angebracht, die wiederum, wie bei den Sektorkörpern 19 von Fig. 3 und 4, innenseitig konkav gewölbte Wände 37 aufweisen, so dass die Ringkörper 27 wiederum kugelgelenkartig gelagert sind. Bei dieser Ausführungsform ist kein den umfänglichen Rand 33 der Scheibe 31 umgebendes Spannband vorgesehen. Ein weiterer Unterschied besteht darin, dass in der zentralen Öffnung 13 der Scheibe 31 ebenfalls eine Durchführung 17 nach Bedarf ausgebildet werden kann, weil sich auch an dieser Öffnung 13 Ringelemente 35 mit kalottenartig gewölbter Innenwand 37 befinden, so dass eine kugelgelenkartige Führungsanordnung durch eingesetzte Ringkörper 27 gebildet werden kann.

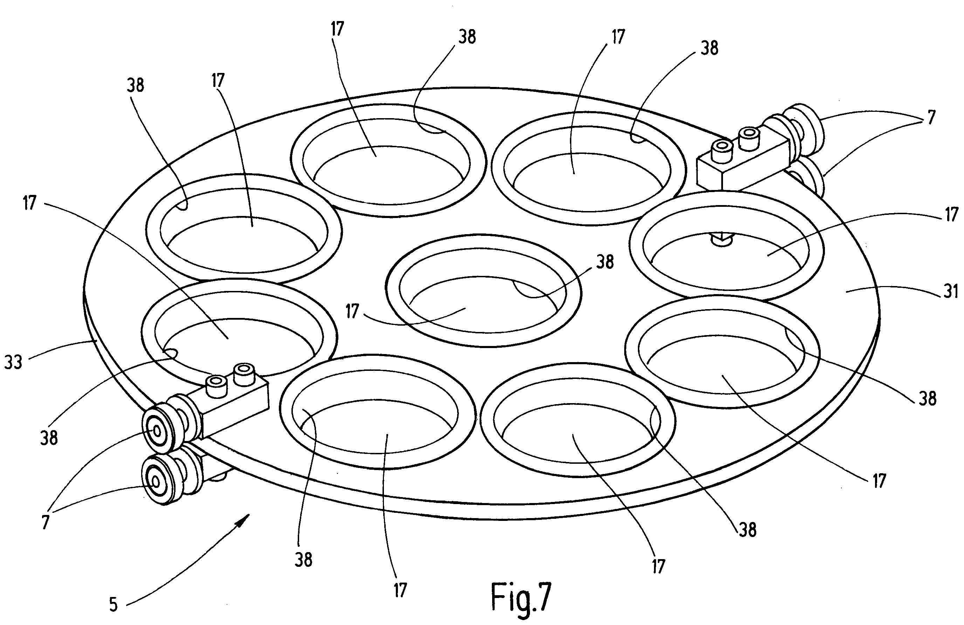

Die Fig. 7 zeigt ein weiter abgewandeltes Ausführungsbeispiel, bei dem ebenfalls eine Scheibe 31 mit einem den kreisrunden Umriss bestimmenden äußeren Rand 33 vorgesehen ist. In den für die Durchführungen 17 vorgesehenen Öffnungen ist als Führungsanordnung jeweils ein Gummiring 38 eingesetzt. Dadurch ist das durchgeführte Kabel in einer elastomeren Manschette nachgiebig geführt, so dass sich das Kabel in gewünschte Neigungen zur Ebene der Scheibe 31 einstellen kann.

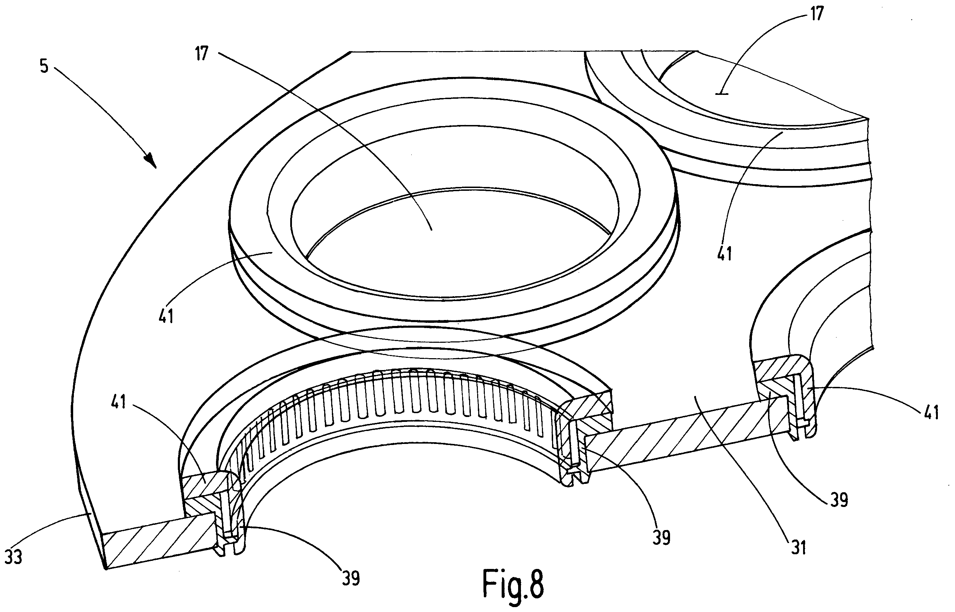

Bei dem in Fig. 8 gezeigten, weiteren Ausführungsbeispiel, bei dem ebenfalls eine Scheibe 31 mit umfänglichem Rand 33 vorgesehen ist, ist die Führungsanordnung der Durchführungen 17 jeweils durch eine Drehlagerung für das Kabelbündel gebildet, wobei ein Nadellager vorgesehen ist, dessen Außenring 39 an der Scheibe 31 festgelegt ist und dessen Innenring 41 das betreffende Kabelbündel umgibt.

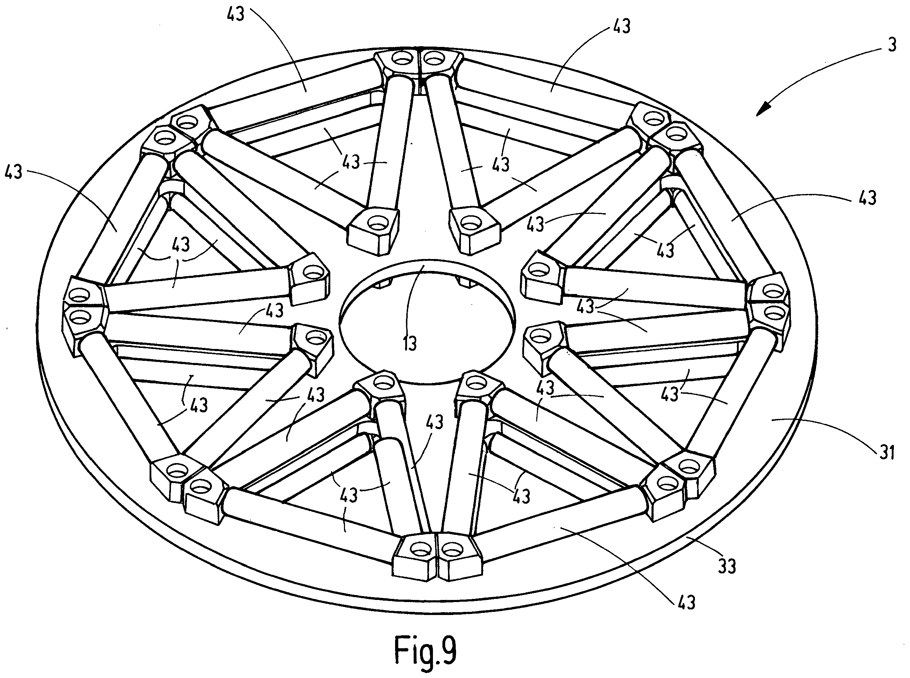

Ein weiter abgewandeltes Ausführungsbeispiel, das in Fig. 9 dargestellt ist, sieht ebenfalls eine Scheibe 31 vor, die mit ihrem Rand 33 den kreisrunden Umfang des Grundkörpers 3, 5 definiert. Für die Durchführungen 17 sind dreieckförmige Öffnungen in der Scheibe 31 gebildet, längs deren Dreieckseiten an Oberseite und Unterseite der Scheibe 31 drehbare Walzenkörper 43 derart angeordnet sind, dass die Walzenoberflächen die Anlagefläche für das jeweils durchgeführte Kabel bilden. Die derart gestaltete Führungsanordnung eröffnet dem durchgeführten Kabel ebenfalls Möglichkeiten für Relativbewegungen zum übrigen Teil des Grundkörpers 3, 5.

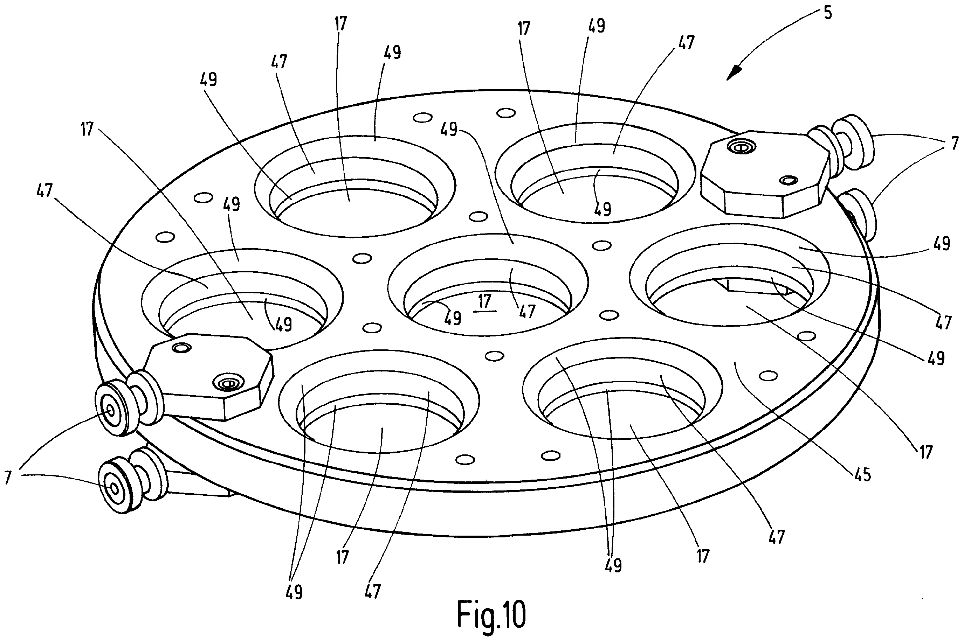

Die Fig. 10 zeigt schließlich ein Ausführungsbeispiel, das sich durch eine besonders einfache Bauweise auszeichnet. Einteiliger Hauptbestandteil des Grundkörpers 3, 5 ist hierbei eine kreisrunde Platte 45, die runde Öffnungen 47 für die Durchführungen 17 aufweist. Die Führungsanordnung für durchgeführte Kabel ist hierbei durch spezielle Formgebung der Wand der Öffnungen 47 gebildet, nämlich durch Wölbungen 49, die die Öffnungen 47 jeweils nach außen hin erweitern und dadurch dem durchgeführten Kabel am Austritt aus den Öffnungen vorgebbare Neigungen ermöglichen.

Während die Einzelheiten der Grundkörper 3, 5 in den Fig. 2 bis 8 und 10 jeweils anhand des Grundkörpers 5 beschrieben sind, der, mit Laufrollen 7 versehen, undrehbar unterhalb eines mit dem Maschinenhaus drehbaren Grundkörpers 3 angeordnet ist, versteht sich, dass sämtliche beschriebenen Bauweisen des Grundkörpers ohne seitliche Laufrollen 7, wie dies in Fig. 9 beispielhaft dargestellt ist, auch als oberer Grundkörper 3 vorgesehen sein können.

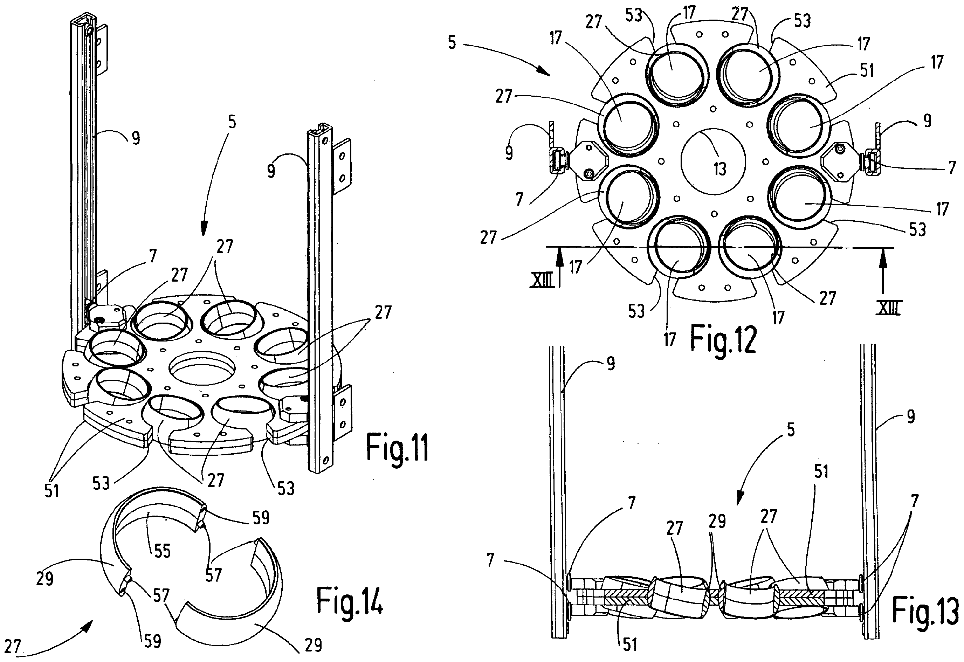

Die Fig. 11 bis 13 zeigen ein weiteres Ausführungsbeispiel, bei dem der Grundkörper 5 aus zwei gleichen Scheiben 51, die aufeinanderliegend angeordnet sind, gebildet ist. Die Scheiben 51 bilden einen Sternkörper der einseitig geschlitzt ist, so dass die im Bereich des Umfangsrandes der Scheiben 51 angeordneten Durchführungen 17 über Schlitze 53 (nicht sämtliche beziffert) nach außen offen sind.

Die Fig. 14 zeigt eine abgewandelte Ausführungsform der Ringkörper 27. Wie dargestellt, sind die Ringkörper 27 aus zwei gleich ausgebildeten Ringhälften 55 gebildet, die miteinander verbindbar sind und an den Verbindungsflächen vorstehende Zapfen 57 und diesen zugeordnete Passbohrungen 59 aufweisen.

Sofern vorstehend von Durchführungen 17 im Grundkörper 3, 5 die Rede ist, meint dies nicht nur Durchführungen, die innerhalb des Grundkörpers angeordnet sind, sondern vielmehr auch solche, die randseitig angeordnet (nicht dargestellt) eine Kabelführung mit einem weiteren Freiheitsgrad gegenüber den bekannten starren Führungslösungen aufweisen. Sofern der Grundkörper im Bereich der Durchführungen randseitig geschlitzt ist, ist insoweit dann auch eine Kabelaufnahme von der Seite her über die Schlitzaufnahme möglich.

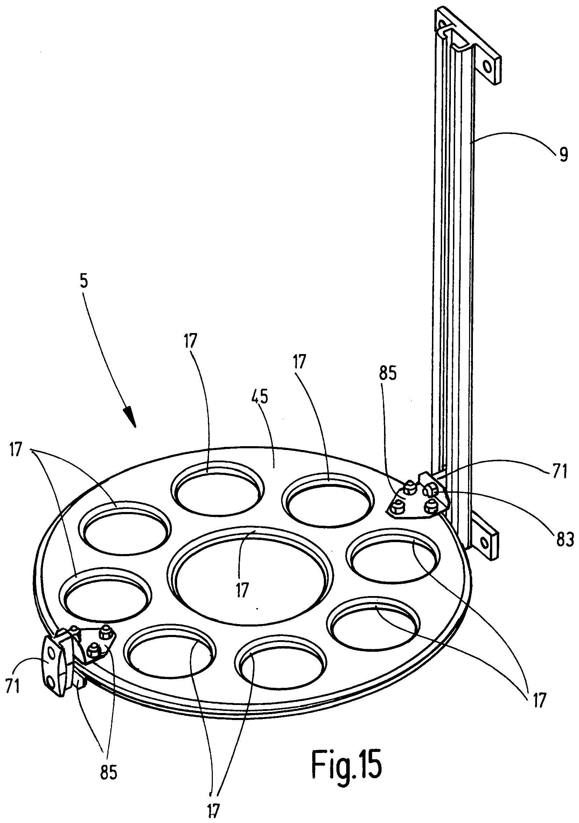

Die Fig. 15 bis 18 zeigen ein weiteres Ausführungsbeispiel, bei dem, wie bei Fig. 10, der Grundkörper 5 durch eine kreisrunde Platte 45 gebildet ist.

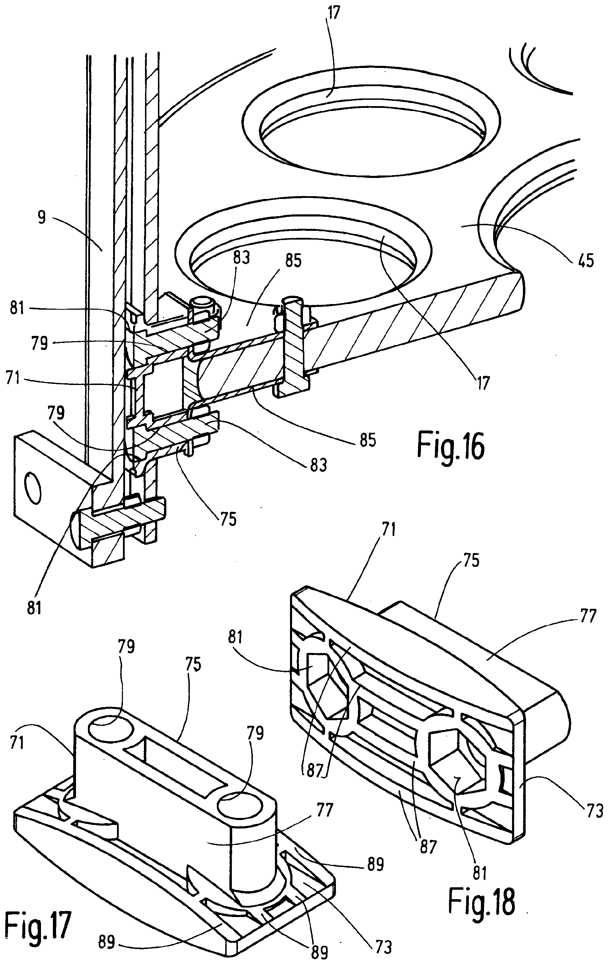

Im Unterschied zu Fig. 10 ist die Platte 45 nicht mittels Paaren von Laufrollen 7 an Laufschienen 9 verschiebbar geführt, sondern jedes Paar der Laufrollen 7 ist durch ein Gleitstück 71 ersetzt, dessen Formgebung aus den Fig. 17 und 18 näher ersichtlich ist. Die Laufschienen 9, von denen in Fig. 15 und 16 lediglich eine gezeigt ist, sind als C-Profilschienen ausgebildet, anders als bei dem Beispiel von Fig. 3, bei dem Laufschienen 9 in Form eines U-Profils vorgesehen sind. Die einstückig aus einem Kunststoffwerkstoff spritzgeformten Gleitstücke 71 weisen einen vorderen Gleitschuh 73 und ein rückwärtiges Führungsteil 75 auf. Letzteres bildet parallele Führungsflächen 77, mit denen das Gleitstück 71 im Öffnungsschlitz des C-Profils der Laufschienen 9 geführt ist. Außerdem dient das Führungsteil 75 als Befestigungsteil, das Schraubenlöcher 79 aufweist, die bis zur Frontseite des Gleitschuhs 73 durchgehen und in erweiterten Sechskantöffnungen 81 enden, in denen Sechskantköpfe von Befestigungsschrauben 83 versenkt aufnehmbar sind. Mit diesen ist, wie am deutlichsten der Fig. 16 entnehmbar ist, das jeweilige Gleitstück 71 mit Haltern 85 verschraubt, die durch Winkelbleche gebildet sind, und ihrerseits mit der Platte 45 verschraubt sind.

Wie Fig. 17 und 18 zeigen, weisen die Gleitstücke 71 an der Frontseite konvex gewölbte Gleitflächen 87 (Fig. 18) und an der Rückseite entsprechend konvex gewölbte Gleitflächen 89 (Fig. 17) auf, mit denen die Gleitstücke 71 an der Innenwand des C-Profils der Laufschienen 9 geführt sind. Diese Wölbung der Gleitflächen 87 und 89 ermöglicht eine Schrägstellung der Platte 45, um einen bedingten Schrägzug der in die Durchführungen 17 eingelegten Kabel zuzulassen, ohne zu verkanten.

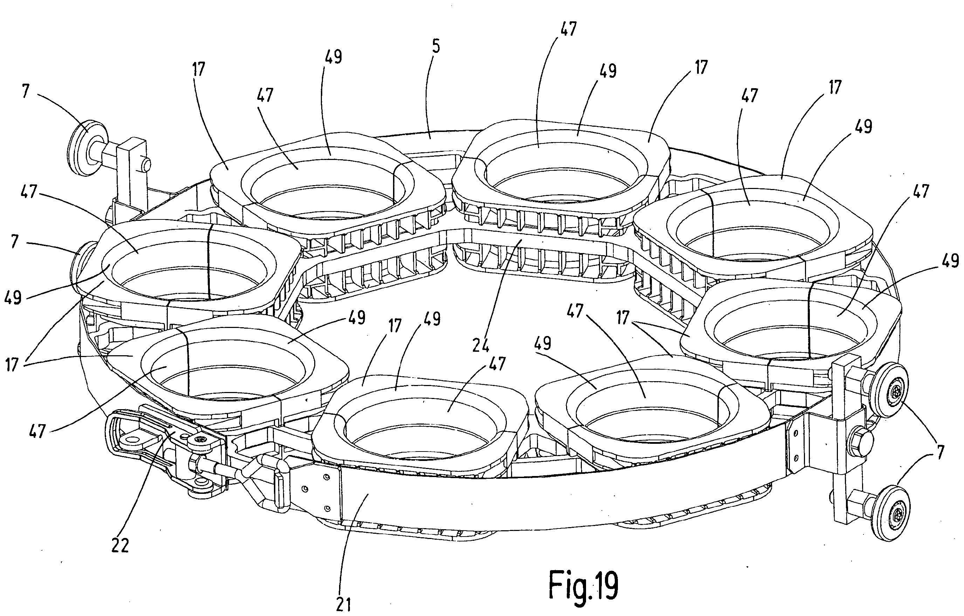

Die Fig. 19 bis 23 zeigen ein Ausführungsbeispiel der Erfindung, das sich von den zuvor beschriebenen Beispielen hauptsächlich dadurch unterscheidet, dass die Durchführungen 17 derart ausgebildet sind, dass ihre den Durchgang für Strangelemente bildende Öffnung 47 geöffnet werden kann. Außerdem sind die Durchführungen 17 am Umfangsbereich des Grundkörpers 5 derart angeordnet, dass bei offenem Zustand der Öffnung 47 Strangelemente von der Außenseite des Grundkörpers 5 her eingelegt werden können, bevor die Öffnung 47 geschlossen wird.

In Fig. 19 ist dieses Ausführungsbeispiel ohne eingelegte Strangelemente mit im geschlossenen Zustand befindlichen Durchführungen 17 dargestellt, die entlang des Umfangsbereichs des Grundkörpers 5 angeordnet sind, wobei die Einheit, in entsprechender Weise wie es bei dem Beispiel von Fig. 3 der Fall ist, durch ein um die Außenseite herumgelegtes Spannband 21 zusammengehalten ist. Beim vorliegenden Beispiel ist das Spannband 21 mittels eines Schnellspannverschlusses 22 werkzeuglos schließbar oder öffenbar.

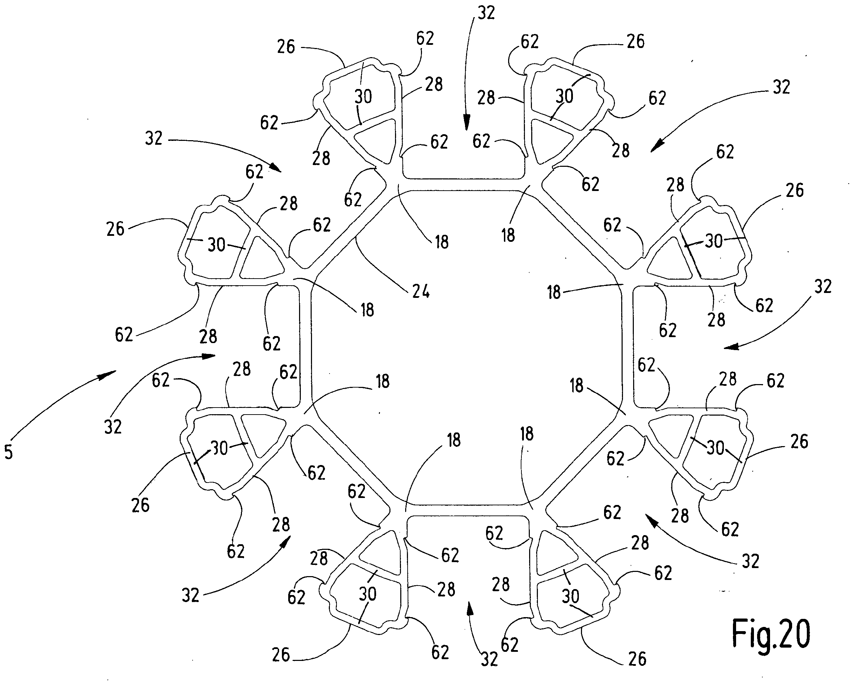

Die Fig. 20 zeigt den Grundkörper 5 in gesonderter Darstellung ohne eingesetzte Durchführungen 17. Der Grundkörper 5 ist in der Art eines Sternkörpers ausgebildet, der vorzugsweise aus einer metallischen Spritzgusslegierung hergestellt ist. Der Grundkörper 5 weist ein innenliegendes, unrundes Ringelement 24, vorliegend in Form eines Oktaeders, auf, von dessen acht Ecken 18 sich jeweils ein Ansatz 26 in Radialrichtung vom Zentrum des Ringelementes 24 weg erstreckt. Die Ansätze 26 sind im großen Ganzen dreieckförmig mit jeweils zwei von den Ecken 18 ausgehenden Armen 28. Diese sind an ihren radial außen liegenden Enden und in einem mittleren Bereich jeweils durch Streben 30 miteinander verbunden. Die Arme 28 zweier zueinander benachbarter Ansätze 26 verlaufen zueinander parallel und begrenzen zwischen sich und dem Ringelement 24 eine Aufnahme 32 für eine in sie einsetzbare Durchführung 17.

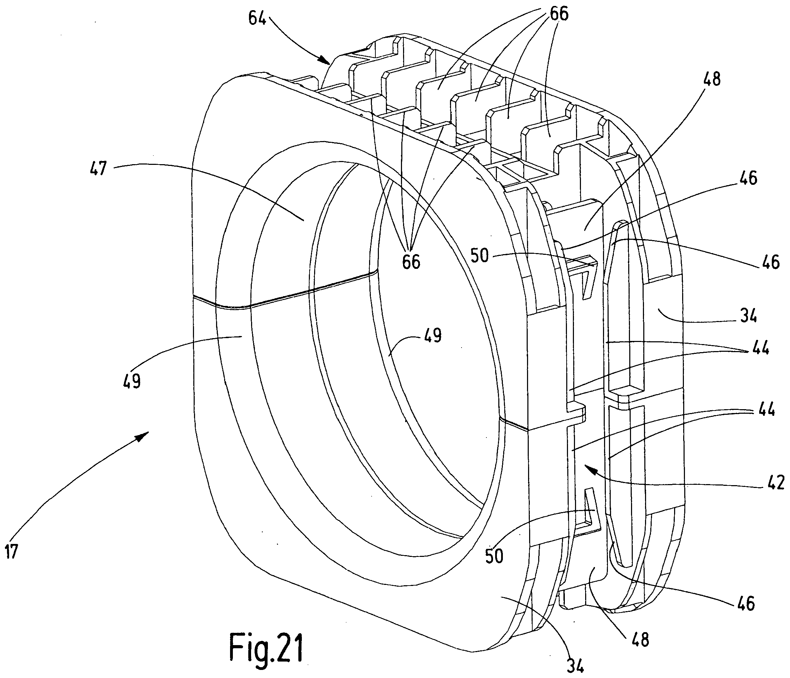

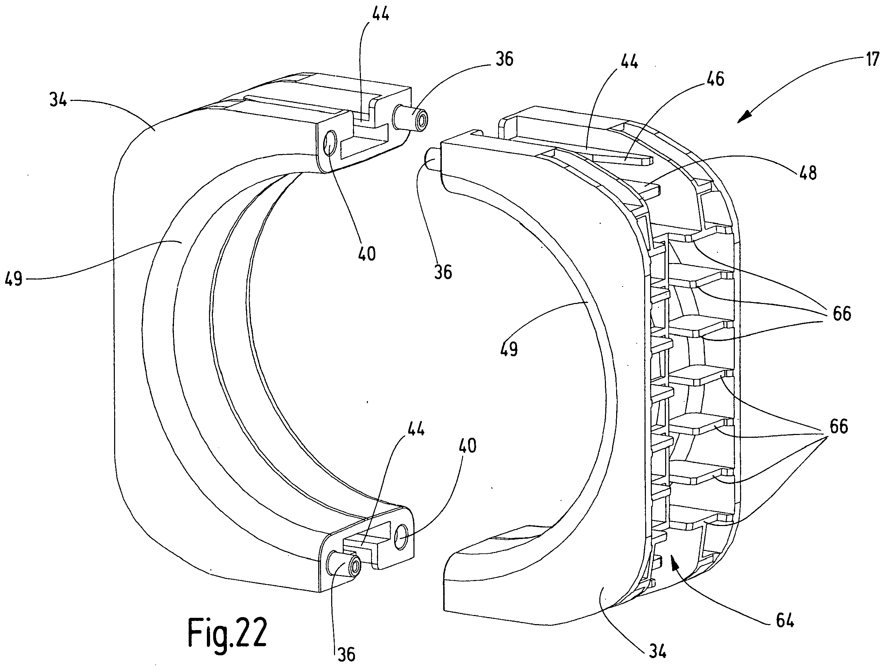

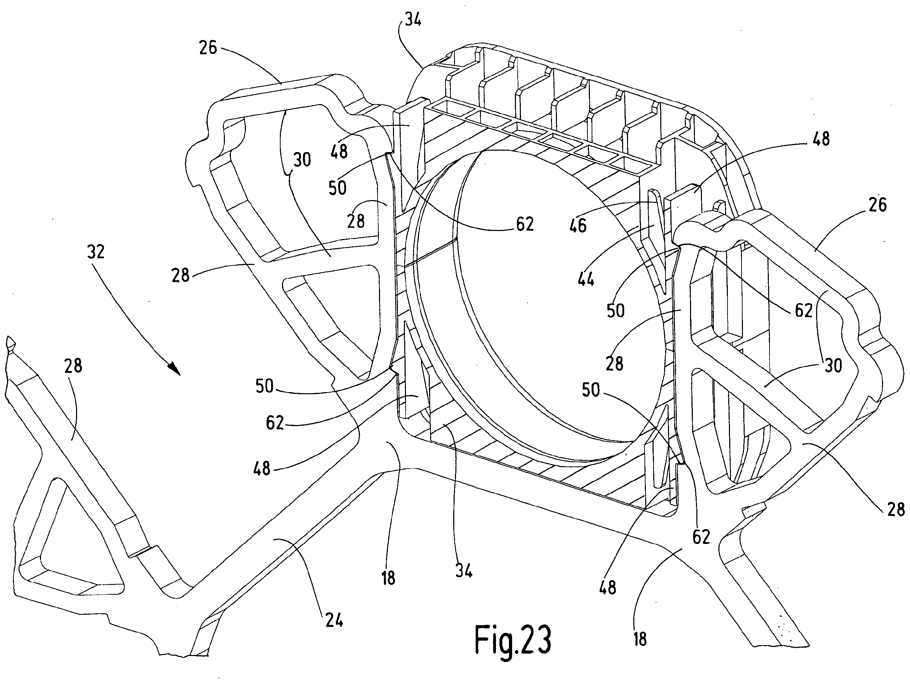

Die Fig. 21 bis 23 zeigen nähere Einzelheiten der Durchführungen 17. Diese bestehen aus zwei Teilkörpern 34, die als Gleichteile ausgebildet und aus Kunststoff spitzgeformt sind. Jeder Teilkörper 34 bildet eine Schelle, die bei dem in Fig. 21 gezeigten, geschlossenen Zustand eine Hälfte der den Strangdurchgang bildenden Öffnung 47 begrenzt. Im geschlossenen Zustand sind, wie in Fig. 22 gezeigt ist, Zapfen 36 und Bohrungen 40 an der jeweiligen Berührungsfläche miteinander in Eingriff. Dadurch ist eine gegenseitige Führung zum Ausgleich von Fertigungstoleranzen gebildet. An den beiden Seiten, die bei der in die Aufnahme 32 eingesetzten Funktionsposition der Teilkörper 34 den Armen 28 zugewandt sind, bilden die Teilkörper 34 jeweils einen Kanal 42, siehe Fig. 21, der durch Führungsleisten 44 seitlich begrenzt ist. Beim Einschieben der Durchführungen 17 in die Aufnahmen 32 ist der jeweilige Arm 28 des Ansatzes 26 des Grundkörpers 5 in diesem Kanal 42 aufgenommen. Abschrägungen 46 an den Enden der Leisten 44 erleichtern das Aufschieben der Durchführungen 17 auf die Arme 28. Innerhalb jedes der Kanäle 42 ist an jedem der Teilkörper 34 eine nachgiebige Rastzunge 48 angeformt. In der Nähe des beweglichen, freien Endes der Rastzungen 48 befindet sich eine nach außen vorstehende Rastnase 50. Diese Rastnase 50 ist, wie aus Fig. 20 und insbesondere aus Fig. 23 ersichtlich ist, für die Zusammenwirkung mit Rastkerben 62 vorgesehen, die sich an den Armen 28 der Ansätze 26 des Grundkörpers 5 befinden. An den anderen Seiten, die in Fig. 21 oben und unten und in Fig. 22 seitlich gelegen sind, ist für den Eingriff des Ringelementes 24 des Grundkörpers 5 ebenfalls ein Kanal 64 gebildet, der durch eine Rippenstruktur 66, siehe Fig. 22, seitlich begrenzt ist.

Bei dieser Ausgestaltung ist für das Einbauen der Durchführungen 17 ein Teilkörper 34 auf die betreffenden Arme 28 aufschiebbar, wobei dieser Teilkörper 34 mit den dem Ringkörper 24 benachbarten Rastkerben 62 verrastet und somit bereits gegen Herausrutschen gesichert ist. Strangelemente können nun bequem von außen her eingelegt werden, wonach der zweite Teilkörper 34 auf die Arme 28 aufgeschoben wird, um die Öffnungen 47 zu schließen, wobei die Verrastung an den äußeren Rastkerben 62 erfolgt, so dass die Strangelemente gegen Herausfallen aus den Aufnahmen 32 gesichert sind. Für die endgültige Sicherung der gebildeten Einheit kann nun das um die Außenseite herumgelegte Spannband 21 mittels des Schnellspannverschlusses 22 gespannt werden. Wie Fig. 19 zeigt, sind bei diesem Ausführungsbeispiel die Laufrollen 7, die zur Führung in den Laufschienen 9 des Turms vorgesehen sind, anders als bei oben beschriebenen Beispielen, nicht mit dem Grundkörper 5 verbunden, sondern am Spannband 21 angebracht.

## Patentansprüche

1. Vorrichtung zum Führen von Kabeln bei Windkraftanlagen, bei der an zumindest einem in seinem Umriss vorzugsweise runden Grundkörper (3, 5) mehrere Durchführungen (17) für mindestens ein Kabel verteilt angeordnet sind, wobei die Durchführungen (17) mit einer Führungsanordnung (27; 38; 39, 41; 43; 48) versehen sind, die dem jeweiligen Kabel Bewegungen relativ zu dem die Führungsanordnung umgebenden Teil der Durchführung (17) erlaubt, wobei mit dem Rand des vertikal bewegbaren Grundkörpers (5) an diametral einander gegenüberliegenden Stellen radial vorstehende Laufrollen (7) verbunden oder verbindbar sind, die in vertikalen Laufschienen (9) im Turm geführt sind, **dadurch gekennzeichnet, dass** ein die Durchführungen (17) in Aufnahmen (32) sicherndes, den Umfang des Grundkörpers (5) umgebendes und an radial außen liegenden Teilkörpern (34) der Durchführungen (17) anliegendes Spannband (21) vorgesehen ist und dass die radial vorstehenden Laufrollen (7) an diametral einander gegenüberliegenden Seiten an dem den Umfang des Grundkörpers (5) umgebenden Spannband (21) angebracht sind.

2. Vorrichtung nach Anspruch 1, **dadurch gekennzeichnet, dass** die jeweilige Führungsanordnung einen das durchgeführte Kabel umgebenden Einsatz (27) aufweist, der in der zugehörigen Durchführung (17) relativ zum Grundkörper (3, 5) beweglich gelagert ist.

3. Vorrichtung nach Anspruch 1 oder 2, **dadurch gekennzeichnet, dass** der Einsatz in Form eines das durchgeführte Kabel umgebenden Ringkörpers (27) ausgebildet ist, dessen Außenseite ein Teil einer konvexen Kugelfläche (29) bildet, mit der er an der ein Teil einer Kugelkalotte bildenden Wand (25) an der Innenseite der Durchführung (17) gelagert ist.

4. Vorrichtung nach einem der vorstehenden Ansprüche, **dadurch gekennzeichnet, dass** die Führungsanordnung einen elastomeren, das in der Durchführung aufgenommene Kabel nachgiebig umgebenden Ring (38), vorzugsweise aus einem synthetischen Gummiwerkstoff, aufweist.

5. Vorrichtung nach einem der vorstehenden Ansprüche, **dadurch gekennzeichnet, dass** die Führungsanordnung eine Drehlagerung (39, 41) für das durchgeführte Kabel aufweist.

6. Vorrichtung nach einem der vorstehenden Ansprüche, **dadurch gekennzeichnet, dass** die Drehlagerung ein Nadellager aufweist, dessen Innenring (41) das durchgeführte Kabel umgibt und dessen Außenring (39) am Grundkörper (3, 5) festgelegt ist.

7. Vorrichtung nach einem der vorstehenden Ansprüche, **dadurch gekennzeichnet, dass** die Führungsanordnung drehbare Walzenkörper (43) aufweist, die am Grundkörper (3, 5) derart angeordnet sind, dass sie seitliche Begrenzungen des Durchgangs der jeweiligen Durchführung (17) bilden.

8. Vorrichtung nach einem der vorstehenden Ansprüche, **dadurch gekennzeichnet, dass** die Durchführungen (17) durch runde Öffnungen (47) in einer den Grundkörper (3, 5) bildenden, runden Platte (45) gebildet sind und dass die Führungsanordnung durch die Öffnungen beidseits nach außen hin erweiternde Wölbungen (49) der Wand der Öffnungen (47) gebildet ist.

9. Vorrichtung nach einem der vorstehenden Ansprüche, **dadurch gekennzeichnet, dass** der Grundkörper (5) entlang seines kreisrunden Umrisses nebeneinanderliegende, radial nach außen offene Aufnahmen (32) für in diese einsetzbare und darin festlegbare Durchführungen (17) aufweist, deren Durchgänge (47) zum Ermöglichen des Einlegens betreffender Kabel öffenbar sind.

10. Vorrichtung nach einem der vorstehenden Ansprüche, **dadurch gekennzeichnet, dass** die Durchführungen (17) zum Ermöglichen des Öffnens der Durchgänge aus zwei die Öffnung (47) des Durchgangs begrenzenden Teilkörpern (34) gebildet sind, die in der jeweiligen Aufnahme in der die Öffnung (47) schließenden Position verrastbar sind.

11. Vorrichtung nach einem der vorstehenden Ansprüche, **dadurch gekennzeichnet, dass** die Teilkörper (34) als Gleichteile ausgebildet sind.

12. Vorrichtung nach einem der vorstehenden Ansprüche, **dadurch gekennzeichnet, dass** zumindest ein Grundkörper (3) mit dem auf dem Turm der zugehörigen Windkraftanlage drehbaren Maschinenhaus verbunden ist und zumindest ein weiter unten angeordneter Grundkörper (5) im Turm undrehbar und vertikal bewegbar gelagert ist.

## Claims

1. An apparatus for routing cables in wind turbines, wherein a number of bushings (17) for at least one cable are arranged distributed around the preferably round perimeter of at least one base body (3, 5), the bushings (17) being provided with a routing arrangement (27; 38; 39, 41; 43; 48) which allows the respective cable to move relative to the part of the bushing (17) surrounding the routing arrangement, radially protruding rollers (7) being connected or being able to be connected to the edge of the vertically moveable base body (5) on diametrically opposing points and which are guided in vertical runners (9) within the tower, **characterised in that** a tensioning belt (21) is provided which secures the bushings (17) in retainers (32), surrounds the circumference of the base body (5) and rests against partial bodies (34) of the bushings (17) lying radially on the outside, and that the radially protruding rollers (7) are attached to diametrically opposing sides on the tensioning belt (21) that surrounds the circumference of the base body (5).

2. The apparatus according to Claim 1, **characterised in that** the respective routing arrangement has an insert (27) that surrounds the cable passing through, which insert is moveably supported in the corresponding bushing (17) relative to the base body (3, 5).

3. The apparatus according to Claim 1 or 2, **characterised in that** the insert is made in the form of an annular body (27) that surrounds the cable passing through, the outside of said annular body forming part of a convex spherical surface (29) on which a part of a wall (25) on the inside of the bushing (17) is supported, forming a spherical cap.

4. The apparatus according to any of the preceding claims, **characterised in that** the routing arrangement comprises an elastomeric ring (38) that flexibly surrounds the cable accommodated within the bushing, preferably made of a synthetic rubber material.

5. The apparatus according to any of the preceding claims, **characterised in that** the routing arrangement has a swivel bearing (39, 41) for the cable passing through.

6. The apparatus according to any of the preceding claims, **characterised in that** the swivel bearing comprises a needle bearing, the inner ring (41) of which surrounds the cable passing through, and the outer ring (39) of which is fixed to the base body (3, 5).

7. The apparatus according to any of the preceding claims, **characterised in that** the routing arrangement has rotatable roller bodies (43) that are arranged on the base body (3, 5) such they form lateral boundaries of the passage of the respective bushing (17).

8. The apparatus according to any of the preceding claims, **characterised in that** the bushings (17) are formed by circular openings (47) in a circular disc that forms the base body (3, 5), and that the routing arrangement is formed by the curves (49) of the wall of the openings (47) expanding the openings outwards on both sides.

9. The apparatus according to any of the preceding claims, **characterised in that** the base body (5) has, along its circular perimeter, retainers lying next to one another and that are open radially in the outward direction for bushings (17) which can be inserted into these retainers and be fixed within them, the passages (47) of these bushings being able to be opened to allow the insertion of the respective cables.

10. The apparatus according to any of the preceding claims, **characterised in that** the bushings (17) are formed by two partial bodies (34) that delimit the opening (47) of the passage so that the passages can be opened, which partial bodies can be locked in the respective retainer in the position that closes the opening (47).

11. The apparatus according to any of the preceding claims, **characterised in that** the partial bodies (34) are made in the form of identical parts.

12. The apparatus according to any of the preceding claims, **characterised in that** at least one base body (3) is connected to the swivelling nacelle located on the tower of the corresponding wind turbine, and at least one base body (5) disposed further down is supported such that it is non-rotatable and vertically moveable within the tower.

## Revendications

1. Dispositif de guidage de câbles dans des éoliennes, dans lequel plusieurs traversées (17), pour au moins un câble, sont réparties sur au moins une embase (3, 5) de contour, de préférence circulaire, les traversées (17) étant pourvues d'un agencement (27; 38; 39, 41; 43; 48) de guidage, qui permet aux câbles d'effectuer des déplacements par rapport à la partie de la traversée (17) entourant l'agencement de guidage, dans lequel, au bord de l'embase (5) mobile verticalement, sont reliés ou peuvent l'être des galets (7) de roulement en saillie radialement en des points opposés diamétralement, galets qui sont guidés dans la tour dans des rails (9) de roulement verticaux, **caractérisé en ce qu'**il est prévu un collier (21) tendeur bloquant les traversées (17) dans des logements (32), entourant le pourtour de l'embase (5) et s'appliquant à des sous-pièces (34) et se trouvant radialement vers l'extérieur des traversées (17) et **en ce que** les galets (7) de roulement en saillie radialement sont mis sur des côtés opposés diamétralement l'un à l'autre du collier (21) tendeur entourant le pourtour de l'embase (5).

2. Dispositif suivant la revendication 1, **caractérisé en ce que** l'agencement de guidage a un insert (27) entourant le câble guidé et monté mobile par rapport à l'embase (3, 5) dans la traversée (17) associée.

3. Dispositif suivant la revendication 1 ou 2, **caractérisé en ce que** l'insert est constitué sous la forme d'une pièce (27) annulaire, qui entoure le câble guidé et dont le côté extérieur forme une partie d'une surface (29) sphérique convexe, par laquelle il est monté sur la paroi (25), formant une partie d'une calotte sphérique, du côté intérieur de la traversée (17).

4. Dispositif suivant l'une des revendications précédentes, **caractérisé en ce que** l'agencement de guidage a un anneau (38), de préférence en matériau de caoutchouc synthétique, entourant en cédant élastiquement un câble élastomère reçu dans la traversée.

5. Dispositif suivant l'une des revendications précédentes, **caractérisé en ce que** l'agencement de guidage a un coussinet (39, 41) de pivotement pour le câble guidé.

6. Dispositif suivant l'une des revendications précédentes, **caractérisé en ce que** le coussinet de pivotement a un palier à aiguille, dont la bague (41) intérieure entoure le câble guidé et dont la bague (39) extérieure est fixée à l'embase (3, 5).

7. Dispositif suivant l'une des revendications précédentes, **caractérisé en ce que** l'agencement de guidage a des pièces (43) de roulement tournantes, qui sont montées sur l'embase (3, 5), de manière à former des limitations latérales du passage de la traversée (17).

8. Dispositif suivant l'une des revendications précédentes, **caractérisé en ce que** les traversées (17) sont formées par des ouvertures (47) circulaires dans une plaque (45) circulaire formant l'embase (3, 5) et **en ce que** l'agencement de guidage est formé par des courbures (49) de la paroi des ouvertures (47), élargissant les ouvertures des deux côtés vers l'extérieur.

9. Dispositif suivant l'une des revendications précédentes, **caractérisé en ce que** l'embase (5) a, le long de son pourtour circulaire, des logements (32) côte à côte et ouverts radialement vers l'extérieur pour des traversées (17) pouvant y être insérées et fixées et dont les passages (47) peuvent être ouverts pour permettre l'insertion du câble concerné.

10. Dispositif suivant l'une des revendications précédentes, **caractérisé en ce que** les traversées (17) sont, pour permettre l'ouverture des passages, formées de deux sous-pièces (34) délimitant l'ouverture (47) du passage et pouvant s'encliqueter dans le logement respectif en la position fermant l'ouverture (47).

11. Dispositif suivant l'une des revendications précédentes, **caractérisé en ce que** les sous-pièces (34) sont constituées sous la forme de pièces pareilles.

12. Dispositif suivant l'une des revendications précédentes, **caractérisé en ce qu'**au moins une embase (3) est reliée au bâtiment des machines tournant sur la tour de l'éolienne associée et au moins une autre embase, disposée en dessous, est montée sans pouvoir tourner dans la tour et avec possibilité de se déplacer verticalement.
